# EUROPÄISCHE PATENTSCHRIFT

(11) **EP 1 726 814 B1**
(45) Veröffentlichungstag und Bekanntmachung des Hinweises auf die Patenterteilung: **05.10.2011**
(21) Anmeldenummer: 06007639.5
(22) Anmeldetag: 12.04.2006
(51) Int. Cl.: F02K 3/06

(54) **Strahltriebwerk**
Jet engine
Moteur à réaction

(30) Priorität: 20.04.2005 DE 102005018139
(43) Veröffentlichungstag der Anmeldung: 29.11.2006
(73) Patentinhaber: MTU Aero Engines GmbH, 80995 München (DE)
(72) Erfinder: Weiler, Wolfgang, 85221 Dachau (DE)

(56) Entgegenhaltungen:
- EP-A- 0 950 808
- EP-A1- 0 558 769
- DE-A1- 3 933 776
- FR-A1- 2 641 333
- GB-A- 2 226 599
- US-B1- 6 209 311

## Beschreibung

Die Erfindung betrifft ein Strahltriebwerk nach dem Oberbegriff des Anspruchs 1.

Die wesentlichen Komponenten eines Strahltriebwerks sind ein Fanmodul und ein als Gasturbine ausgebildetes Kerntriebwerk. Das Kerntriebwerk ist in Strömungsrichtung gesehen stromabwärts des Fanmoduls positioniert, wobei ein Teil der das Fanmodul durchströmenden Strömung dem Kerntriebwerk zugeführt wird, wohingegen der andere Teil der das Fanmodul durchströmenden Strömung als sogenannte Bypass-Strömung des Fanmoduls am Kerntriebwerk vorbei geführt wird. Solche Strahltriebwerke bezeichnet man auch als Zweikreisstrahltriebwerke. Das Kerntreibwerk verfügt über mindestens einen Verdichter, mindestens eine Brennkammer sowie mindestens eine Turbine. Üblicherweise verfügt das Kerntreibwerk über zwei stromaufwärts einer Brennkammer positionierte Verdichter sowie zwei stromabwärts der Brennkammer positionierte Turbinen. Bei den zwei Verdichtern handelt es sich dann um einen Niederdruckverdichter sowie einen Hochdruckverdichter und bei den zwei Turbinen um eine Hochdruckturbine sowie eine Niederdruckturbine. Nach dem Stand der Technik sind die Rotoren von Hochdruckverdichter und Hochdruckturbine sowie von Niederdruckverdichter und Niederdruckturbine durch jeweils eine Welle miteinander verbunden, wobei die beiden Wellen einander konzentrisch umschließen und demnach ineinander verschachtelt sind. Es sind auch Kerntriebwerke bekannt, die zusätzlich über einen Mitteldruckverdichter und eine Mitteldruckturbine verfügen, wobei dann die Rotoren von Mitteldruckverdichter und Mitteldruckturbine über eine weitere Welle verbunden sind.

Aus der Praxis ist es bereits bekannt, dass bei solchen Zweikreisstrahltriebwerken der Fan gegenläufig zum Niederdruckverdichter rotiert. Der Niederdruckverdichter wird dann unmittelbar von der Niederdruckturbine angetrieben, wobei der Fan ebenfalls von der Niederdruckturbine angetrieben wird, jedoch unter Zwischenschaltung eines Getriebes. Der Niederdruckverdichter ist mit deutlichem Abstand stromabwärts des Fan positioniert, wobei bei den aus der Praxis bekannten Zweikreisstrahltriebwerken zwischen Fan und Niederdruckverdichter ein sogenannter Lagerstern angeordnet ist. Der Niederdruckverdichter verfügt üblicherweise über mehrere Stufen.

Dieses aus der Praxis bekannte Konzept für Zweikreisstrahltriebwerke ist durch eine relativ lange Bauform gekennzeichnet. So ist, wie bereits erwähnt, der Niederdruckverdichter mit deutlichem Abstand stromabwärts des Fan positioniert, wobei der Niederdruckverdichter dabei mehrstufig ausgebildet ist. Eine große Baulänge von Strahltriebwerken verursacht ein hohes Gewicht und beeinträchtigt den Wirkungsgrad derselben.

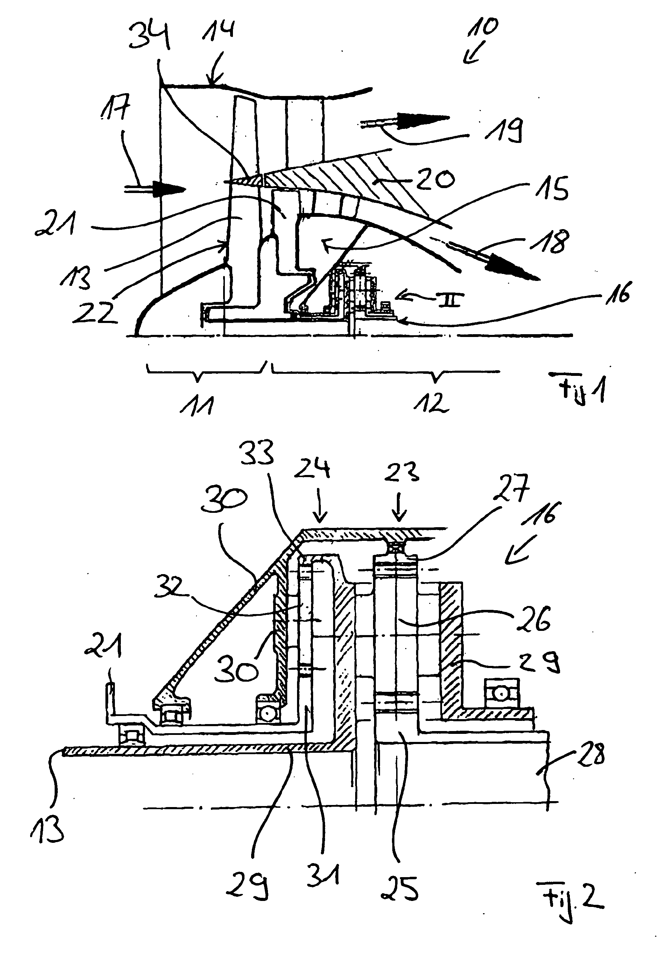

Aus dem Dokument EP-A-0 558 769 ist ein Strahltriebwerk mit einem Fanmodul und einem Kerntriebwerk bekannt, bei dem der Fan von der Niederdruckturbine über eine welle direkt, d.h. mit der selben Drehrichtung und der selben Drehzahl angetrieben wird. Der Niederdruckverdichter ist ohne Leitschaufeln mit einem Innenrotor und einem dazu koaxialen, gegenläufigen Außenrotor ausgeführt. Der Innenrotor ist direkt mit dem Fan gekoppelt und mit letzterem somit drehrichtungs- und drehzahlgleich. Der Außenrotor des Niederdruckverdichters wird über ein Getriebe von der Niederdruckwelle angetrieben und rotiert gegenläufig zum Fan und zum Innenrotor. Das stromaufwärtige Laufrad des Außenrotors wird direkt vom nabenseitigen Abschnitt des Fans angeströmt. Siehe hierzu die Figuren 1 bis 3 des Dokuments. Die Kombination aus Fan, Niederdruckverdichter und Getriebe ist relativ kompakt und axial kurz. Die "exotische" Verdichterbauart mit Innen- und Außenrotor ist aufwändig und problematisch und hat sich in der Praxis nicht durchsetzen können. Der Direktantrieb des Fan erfordert eine langsamlaufende, vielstufige und dadurch große sowie schwere Niederdruckturbine

Hiervon ausgehend liegt der vorliegenden Erfindung das Problem zu Grunde, ein neuartiges Strahltriebwerk zu schaffen, welches bei kompakter Bauweise die Vorteile des Getriebekonzepts optimal nutzt

Dieses Problem wird durch ein Strahltriebwerk gemäß Anspruch 1 gelöst. Bei diesem sind der Fan und ein stromabwärts des Fan positioniertes Laufrad des Niederdruckverdichters in Strömungsrichtung unmittelbar hintereinander positioniert, derart, dass ein nabenseitiger Anschnitt des Fan und das Laufrad eine gegenläufige Verdichterstufe bilden. Erfindungsgemäß werden der Fan und das Laufrad des Niederruckverdichters unter Zwischenschaltung eines Getriebes von der Niederdruckturbine angetrieben, wobei der Fan mit der selben Drehrichtung aber langsaner als die Niederdruckturbine rotiert.

Beim erfindungsgemäßen Strahltriebwerk ist unter Aufhebung des nach dem Stand der Technik üblichen Lagersterns zwischen Fan und Niederdruckverdichter der Fan unmittelbar benachbart bzw. stromaufwärts des Niederdruckverdichters angeordnet, und zwar derart, dass ein nabenseitiger Abschnitt des Fan und ein stromabwärts des Fan positioniertes Laufrad des Niederdruckverdichters eine gegenläufige Verdichterstufe bilden. Durch die Vermeidung des Lagersterns zwischen Fan und Niederdruckverdichter ist eine deutliche Verkürzung der Baulänge des gesamten Strahltriebwerks möglich, wodurch Gewicht und Kosten eingespart werden können. Dies resultiert letztendlich in einem verbesserten Wirkungsgrad des Strahltriebwerks.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: einen schematisierten Ausschnitt aus einem erfindungsgemäßen Strahltriebwerk nach einem ersten Ausführungsbeispiel der Erfin- dung im Bereich eines Fan und Niederdruckverdichters;
- Fig. 2: das Detail II des Strahltriebwerk gemäß Fig. 1; und
- Fig. 3: einen schematisierten Ausschnitt aus einem erfindungsgemäßen Strahltriebwerk nach einem zweiten Ausführungsbeispiel der Erfin- dung im Bereich eines Fan und Niederdruckverdichters.

Nachfolgend wird die hier vorliegende Erfindung unter Bezugnahme auf Fig. 1 bis 3 in größerem Detail beschrieben.

Fig. 1 zeigt einen Ausschnitt aus einem als Zweikreisstahltriebwerk ausgebildeten Strahltriebwerk 10, welches ein Fanmodul 11 sowie ein Kerntriebwerk 12 umfasst. Das Fanmodul wird von einem Fan 13 sowie einem Fangehäuse 14 gebildet. Das Kerntriebwerk 12 umfasst einen im gezeigten Ausführungsbeispiel einstufig ausgebildeten Niederdruckverdichter 15 sowie stromabwärts des Niederdruckverdichters 15 über weitere, nichtdargestellte Komponenten, nämlich einen Hochdruckverdichter, eine Brennkammer, eine Hochdruckturbine sowie eine Niederdruckturbine. Die Hochdruckturbine ist mit dem Hochdruckverdichter über eine Welle gekoppelt und treibt denselben an. Die Niederdruckturbine ist über eine weitere Welle sowie ein Getriebe 16 einerseits mit dem Niederdruckverdichter 15 und andererseits mit dem Fan 13 gekoppelt, wobei die Niederdruckturbine sowohl den Niederdruckverdichter 15 als auch den Fan 13 antreibt.

Wie Fig. 1 entnommen werden kann, strömt im Sinne des Pfeils 17 eine Luftströmung in das Fanmodul 11 ein, wobei ein erster Teil dieser Strömung 17 im Sinne des Pfeils 18 dem Kerntriebwerk zugeführt wird, wohingegen der andere Teil der Strömung im Sinne des Pfeils 19 als sogenannte Bypass-Strömung am Kerntriebwerk 12 vorbei geleitet wird. Wie Fig. 1 entnommen werden kann, wird ein Kerntriebwerk-Strömungskanal vom Bypass-Strömungskanal durch einen statorseitigen Gehäuseabschnitt 20 getrennt.

Wie bereits erwähnt, werden sowohl der Fan 13 als auch der Niederdruckverdichter 15 unter Zwischenschaltung des Getriebes 16 von der Niederdruckturbine aus angetrieben. Der Fan 13 rotiert dabei gegenläufig zum Niederdruckverdichter 15. Dabei sind der Fan 13 sowie ein stromabwärts des Fan 13 positioniertes Laufrad 21 des Niederdruckverdichters 15 unmittelbar hintereinander positioniert, und zwar derart, das ein nabenseitiger Abschnitt 22 des Fan 13 und das Laufrad 21 eine gegenläufige Verdichterstufe bildet. Auf einen nach dem Stand der Technik üblichen Lagerstern zwischen Fan 13 und Niederdruckverdichter 15 wird bei dem erfindungsgemäßen Strahltriebwerk 10 verzichtet, nämlich durch eine fliegende Anordnung sowohl des Fan 13 als auch des Niederdruckverdichters 15. Das Getriebe 16, welches nachfolgend unter Bezugnahme auf Fig. 2 beschrieben wird, verfügt über einen Eintrieb auf der einen Seite und zwei koaxial zueinander angeordnete Abtriebe für den Fan 13 sowie den Niederdruckverdichter 15 auf der anderen Seite desselben.

Gemäß Fig. 2 ist das Getriebe 16 des Strahltriebwerks 10 der Fig. 1 als Planetengetriebe ausgebildet, welches zwei Teilgetriebe 23 und 24 umfasst. Das Teilgetriebe 23 wird von einem Sonnenrad 25, einem Planetenrad 26 sowie einem Hohlrad 27 gebildet. Das Sonnenrad 25 des Teilgetriebes 23 ist auf einer zur Niederdruckturbine führenden Welle 28 positioniert und rotiert zusammen mit dieser Welle 28. Am Planetenrad 26 greift beidseitig ein sogenannter Planetenträger 29 an, wobei der Planetenträger 29 auch als Steg bezeichnet wird. Das Hohlrad 27 des Teilgetriebes 23 ist in Umfangsrichtung gehäusefest ausgeführt und demnach mit einem Gehäuse 30 verbunden. Der Planetenträger 29 ist mit dem Fan 13 des Strahltriebwerks 10 gekoppelt. Das zweite Teilgetriebe 24 wird wiederum von einem Sonnenrad 31, einem Planetenrad 32 und einem Hohlrad 33 gebildet. Das Hohlrad 33 des Teilgetriebes 24 ist mit dem Planetenträger 29 des Planetenrads 26 verbunden. Das Planetenrad 33 des Teilgetriebes 24 greift am Gehäuse 30 an und ist demnach in Umfangsrichtung gehäusefest gelagert. Das Sonnenrad 31 führt zum Laufrad 21 des Niederdruckverdichters 15.

Der Leistungseintrag in das Getriebe 16 der Fig. 1 und 2 erfolgt demnach über das Sonnenrad 25 des Teilgetriebes 23. Ein erster Abtrieb aus dem Getriebe 16 erfolgt über den Planetenträger 29 des Planetenrads 26 des Teilgetriebes 23 zum Fan 13, wodurch gewährleistet wird, dass der Fan 13 mit derselben Drehrichtung rotiert wie die Niederdruckturbine. Ein zweiter Abtrieb des Getriebes 16 der Fig. 2 erfolgt über das Sonnenrad 31 des Teilgetriebes 24 mit einem gehäusefestem Träger des Planetenrades 32 des Teilgetriebes 24, wodurch für das Laufrad 21 des Niederdruckverdichters 15 eine Drehrichtungsumkehr relativ zur Niederdruckturbine sowie relativ zum Fan 13 realisiert wird.

Durch eine entsprechende Dimensionierung der Radien bzw. Durchmesser der Sonnenräder, Planetenräder und damit Hohlräder kann das Übersetzungsverhältnis der Drehzahlen zwischen Niederdruckturbine und Fan 13 einerseits und Niederdruckturbine sowie Niederdruckverdichter 15 andererseits bestimmt bzw. festgelegt werden. Vorzugsweise rotieren der Fan 13, das Laufrad 21 des Niederdruckverdichters 15 sowie die Niederdruckturbine mit jeweils unterschiedlichen Drehzahlen.

Wie bereits erwähnt, wird der Kerntriebswerk-Strömungskanal vom Bypass-Strömungskanal durch den statorseitigen Gehäuseabschnitt 20 getrennt. Gemäß Fig. 1 ist dem Fan 13 ein strömungsführendes Element 34 zugeordnet, welches bereits im Bereich des Fan 13 den Kerntriebswerks-Strömungskanal vom Bypass-Strömungskanal trennt. Dieses strömungsführende Element 34 schließt sich radial außen unmittelbar an den nabenseitigen Abschnitt 22 des Fan 13 an, der mit dem unmittelbar stromabwärts des Fan 13 positionierten Laufrad 21 des Niederdruckverdichters 15 die gegenläufige Verdichterstufe bildet. Das strömungsführende Element 34 unterstützt demnach die Strömungszuführung zum Kerntriebwerk 12. Das strömungsführende Element 34 wird auch als Strömungsteiler bezeichnet.

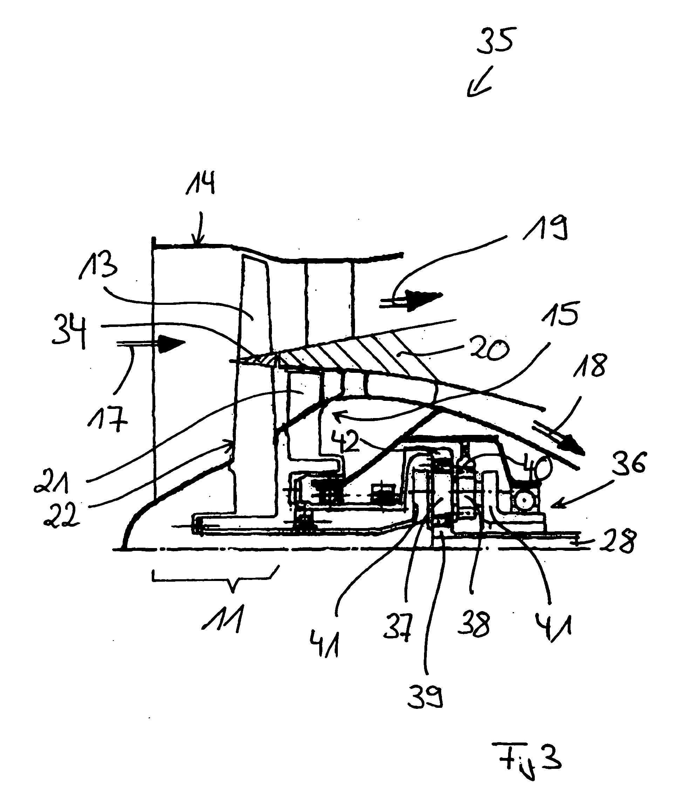

Ein weiteres Ausführungsbeispiel eines erfindungsgemäßen Strahltriebwerks 35 zeigt Fig. 3, wobei sich das Strahltriebwerk 35 der Fig. 3 lediglich durch die Ausgestaltung des Getriebes unterscheidet, welches einerseits den Fan 13 und andererseits den Niederdruckverdichter 15 antreibt. Zur Vermeidung unnötiger Wiederholungen werden daher für gleiche Baugruppen gleiche Bezugsziffern verwendet und es wird nachfolgend nur auf die Details eingegangen, durch die sich das Ausführungsbeispiel der Fig. 3 vom Ausführungsbeispiel der Fig. 1 und 2 unterscheidet.

Im Ausführungsbeispiel der Fig. 3 wird sowohl der Fan 13 als auch das Laufrad 21 des Niederdruckverdichters 15 wiederum unter Zwischenschaltung eines Getriebes 36 von der Niederdruckturbine angetrieben. Im Ausführungsbeispiel der Fig. 3 ist das Getriebe 36 als sogenanntes Differenzialplanetengetriebe ausgeführt. Das Differenzialplanetengetriebe der Fig. 3 verfügt über zwei drehfest gekoppelte Planetenräder 37 und 38 mit unterschiedlichen Durchmessern, die demnach gemeinsam rotieren. Ein Sonnenrad 39 des Differenzialplanetengetriebes 36, welches mit der Welle 28 gekoppelt ist, steht im Eingriff mit dem Planetenrad 37, welches gemäß Fig. 3 über einen größeren Durchmesser verfügt als das Planetenrad 38, an welchem ein gehäusefestes Hohlrad 40 angreift. Zu beiden Seiten der beiden Planetenräder 37 und 38 erstreckt sich ein sogenannter Planetenträger 41, der auch als Steg bezeichnet wird und der gemäß Fig. 3 mit dem Fan 13 gekoppelt ist. Ein weiteres Hohlrad 42 des Differenzialplanetengetriebes 36 der Fig. 3 greift am Planetenrad 37 mit dem größeren Durchmesser an und ist mit dem Laufrad 21 des Niederdruckverdichters 15 gekoppelt. Beim Differenzialplanetengetriebe 36 der Fig. 3 erfolgt demnach der Leistungseintrag über das Sonnenrad 39, welches mit der zur Niederdruckturbine führenden Welle 28 gekoppelt ist. Ein erster Abtrieb erfolgt über den Planetenträger 41 zum Fan 13, wodurch der Fan 13 in gleicher Richtung rotiert wie die Niederdruckturbine. Ein zweiter Abtrieb erfolgt über das Hohlrad 42 zum Laufrad 21 des Niederdruckverdichters 15, wodurch eine Drehrichtungsumkehr für den Niederdruckverdichter 15 etabliert wird.

Mit dem Differenzialplanetengetriebe 36 der Fig. 3 sind größere Übersetzungsverhältnisse realisierbar als mit dem Planetengetriebe 16 des Ausführungsbeispiels der Fig. 1 und 2.

Beiden Ausführungsbeispielen ist jedoch gemeinsam, dass der Fan 13 sowie das stromabwärts des Fan 13 positionierte, gegenläufig rotierende Laufrad 21 des Niederdruckverdichters 15 in Strömungsrichtung unmittelbar hintereinander positioniert sind, und zwar derart, das dieselben eine gegenläufige Verdichterstufe bilden. In beiden Ausführungsbeispielen entfällt der nach dem Stand der Technik üblicher Lagerstern zwischen Fan und Niederdruckverdichter. Hierdurch kann eine Verkürzung der gesamten Baulänge des Strahltriebwerks realisiert werden. Es ergeben sich Kostenvorteile, Gewichtseinsparungen sowie eine Verbesserung des Gesamtwirkungsgrads des Strahltriebwerks.

## Patentansprüche

1. Strahltriebwerk, mit einem Fanmodul (11) und einem Kerntriebwerk (12), wobei das Fanmodul (11) einen Fan (13; und ein Fangehäuse (14) aufweist, wobei das Kerntriebwerk (12) zumindest einen Niederdruckverdichter (15), einen Hochdruckverdichter, eine Brennkammer, eine Hochdruckturbine und eine Niederdruckturbine umfasst, wobei die Hochdruckturbine den Hochdruckverdichter antreibt, wobei die Niederdruckturbine den Niederdruckverdichter (15) und den Fan (13) gegenläufig zu wenigstens einem Laufrad (21) des Niederdruckverdichters (15) antreibt, und wobei der Fan (13) und ein stromabwärts des Fan (13) positioniertes Laufrad (21) des Niederdruckverdichters (15) in Strömungsrichtung unmittelbar hintereinander positioniert sind, derart, dass ein nabenseitiger Abschnitt (22) des Fan (13) und das Laufrad (21) eine gegenläufige Verdichterstufe bilden, **dadurch gekennzeichnet, dass** der Fan (13) und das Laufrad (21) unter Zwischenschaltung eines Getriebes (16; 36) von der Niederdruckturbine angetrieben werden, wobei der Fan (13) mit derselben Drehrichtung wie und mit niedriger Drehzahl als die Niederdruckturbine rotiert, und das Laufrad (21) in gegenläufiger Drehrichtung wie die Niederdruckturbine rotiert.

2. Strahltriebwerk nach Anspruch 1,
**dadurch gekennzeichnet,**
**dass** der Fan (13) und das Laufrad (21) und die Niederdruckturbine mit unterschiedlichen Drehzahlen rotieren.

3. Strahltriebwerk nach Anspruch 1 oder 2,
**dadurch gekennzeichnet,**
**dass** das Getriebe (16) als Planetengetriebe ausgebildet ist.

4. Strahltriebwerk nach Anspruch 3,
**dadurch gekennzeichnet,**
**dass** das Getriebe (36) als Differenzialplanetengetriebe ausgebildet ist.

5. Strahltriebwerk nach einem der Ansprüche 1 bis 4,
**dadurch gekennzeichnet,**
**dass** der Fan (13) ein den Kerntriebwerk-Strämungskanal vom Bypass-Strömungskanal trennendes, strömungsführendes Element (34) aufweist.

6. Strahltriebwerk nach Anspruch 5,
**dadurch gekennzeichnet,**
**dass** das strömungsführende Element (34) als Strömungsteiler ausgeführt ist.

## Claims

1. A jet engine having a fan module (11) and a core engine (12), wherein the fan module (11) has a fan (13) and a fan housing (14), wherein the core engine (12) comprises at least one low-pressure compressor (15), a high-pressure compressor, a combustion chamber, a high-pressure turbine and a low-pressure turbine, wherein the high-pressure turbine drives the high-pressure compressor, wherein the low-pressure turbine drives the low-pressure compressor (15) and the fan (13) in the opposite direction to at least one rotor disc (21) of the low-pressure compressor (15), and wherein the fan (13) and a rotor disc (21) of the low-pressure compressor (15) positioned downstream of the fan (13) are positioned directly one after the other in the direction of flow in such a way that a section (22) of the fan (13) on the hub side and the rotor disc (21) form a counter-rotating compressor stage, **characterised in that** the fan (13) and the rotor disc (21) are driven by the low-pressure turbine with interconnection of a gear unit (16; 36), wherein the fan (13) rotates in the same direction of rotation as and at a lower rotational speed than the low-pressure turbine, and the rotor disc (21) rotates in the opposite direction of rotation to the low-pressure turbine.

2. A jet engine according to claim 1,
**characterised in that**
the fan (13) and the rotor disc (21) and the low-pressure turbine rotate at different rotational speeds.

3. A jet engine according to claim 1 or 2,
**characterised in that**
the gear unit (16) is formed as a planetary gear unit.

4. A jet engine according to claim 3,
**characterised in that**
the gear unit (36) is formed as a differential planetary gear unit.

5. A jet engine according to one of claims 1 to 4,
**characterised in that**
the fan (13) has a flow-guiding element (34) that separates the core-engine flow channel from the bypass flow channel.

6. A jet engine according to claim 5,
**characterised in that**
the flow-guiding element (34) is constructed as a flow divider.

## Revendications

1. Moteur à réaction comportant un module à double flux (11) et un moteur central (12), le module à double flux (11) présentant une soufflante (13) et un carter de soufflante (14), le moteur central (12) comprenant au moins un compresseur basse pression (15), un compresseur haute pression, une chambre de combustion, une turbine haute pression et une turbine basse pression, la turbine haute pression entraînant le compresseur haute pression, la turbine basse pression entraînant le compresseur basse pression (15) et la soufflante (13) dans le sens inverse d'au moins d'une roue mobile (21) du compresseur basse pression (15) et la soufflante (13) et une roule mobile (21), du compresseur basse pression (15), positionnée à l'aval de la soufflante (13), étant positionnés directement l'un derrière l'autre dans le sens de l'écoulement de telle façon qu'un tronçon (22), côté moyeu, de la soufflante (13) et la roue mobile (21) forment un étage de compresseur en sens inverse, **caractérisé en ce que** la soufflante (13) et la roue mobile (21) sont entraînés par la turbine basse pression par l'intermédiaire d'un engrenage (16 ; 36), la soufflante (13) tournant dans le même sens de rotation que la turbine basse pression et à une vitesse inférieure à celle-ci, et la roue mobile (21) tournant dans le sens contraire à la turbine basse pression.

2. Moteur à réaction selon la revendication 1, **caractérisé en ce que** la soufflante (13) et la roue mobile (21) ainsi que la turbine basse pression tournent à des vitesses différentes.

3. Moteur à réaction selon la revendication 1 ou la revendication 2, **caractérisé en ce que** l'engrenage (16) est un engrenage planétaire.

4. Moteur à réaction selon la revendication 3, **caractérisé en ce que** l'engrenage (36) est un engrenage planétaire différentiel.

5. Moteur à réaction selon l'une quelconque des revendications 1 à 4, **caractérisé en ce que** la soufflante (13) présente un élément d'écoulement (34) séparant le canal d'écoulement du moteur central du canal d'écoulement du by-pass.

6. Moteur à réaction selon la revendication 5, **caractérisé en ce que** l'élément d'écoulement (34) est un diviseur d'écoulement.
